# EUROPEAN PATENT APPLICATION

(11) **EP 1 524 041 A1**
(43) Date of publication of application: **20.04.2005**
(21) Application number: 03078291.6
(22) Date of filing: 17.10.2003
(51) Int. Cl.: B08B 3/04

(54) **Laser removal method for labelled containers**

(71) Applicant: Heineken Technical Services B.V., 2382 PH Zoeterwoude (NL)
(72) Inventor: Scheffer, Hendrik Jan, 2593 ZM Den Haag (NL); Van Geijlswijk, Petrus Johannes, 2251 NV Voorschoten (NL); Koppe, Karel Bernhard, 2406 JX Alphen aan den Rijn (NL)
(74) Representative: van Westenbrugge, Andries

(57) **Abstract**

The invention relates to method of removing a label from a container. The label comprises an image layer with a predetermined thickness and an adhesive layer, the adhesive layer adhering to the container. The method comprises the steps of:
- cutting through the thickness of the image layer with a laser beam in a pattern across the surface of the label; and
- placing the container in a wash liquid for a predetermined washing period.

## Description

The invention relates to a method of removing a label from a container, the label comprising an image layer with a predetermined thickness and an adhesive layer, the adhesive layer adhering to the container.

Such a method is known from WO 97/35291, in the name of the applicant. In the known label removal process, an image transfer label, also called an "ink-only label" that is applied on a plastic crate, is subjected to a turbulent soaking process to form cracks in the label for providing access of the washing liquid to the adhesive along these cracks. The label pieces that are released from the container, which may be a plastic crate, can be removed from the washing liquid by sieving.

The known method works well with image transfer labels, which are very thin, such as 10-20 µm or less, and have little structural integrity. This allows the label to be easily ruptured and removed. For labels formed of paper or a film carrying the imprint, which film is adhesively (by pressure sensitive or heat activated adhesive) connected to a container, removal is more difficult. This is especially the case for labels which are applied to containers, such as plastic crates, in a semi-permanent manner. "Semi-permanent" is in the drinks industry generally defined as containers having a lifetime of 5 years, and making between 1 and 30 return trips to a filling line, such as for instance a brewery.

It therefore is an object of the present invention to provide a method for removal of labels from an object, in particular from a container, which allows rapid removal of labels, in particular semi-permanent labels.

It is another object of the present invention to provide a label removal method which causes no damage to the object, and which allows rapid and complete removal of the label.

It is again an object of the invention to provide a label removal method which allows easy retrieval of the removed label material.

Hereto the method according to the present invention comprises the steps of:
- cutting through the thickness of the image layer with a laser beam in a pattern across the surface of the label; and
- placing the object in contact with a washing liquid for a predetermined washing period.

It was found that by cutting through the label thickness with a laser beam, a sufficient access of the wash liquid to the adhesive is possible such that the tack of the adhesive can be reduced by the wash liquid or such that the adhesive can be dissolved in the wash liquid. The label will be easily released in the wash liquid, and can be removed in one or in several pieces, without dissolving or disintegrating to such an extent as to make separation problematic. Hence semi-permanent labels, which have a wear resistant image layer, can now be easily removed, using in part existing washing equipment used for cleaning of the container prior to refilling.

The contact with the wash liquid can be achieved by submerging the object in a soaking bath, by spraying the object with water jets, preferably under pressure or combinations thereof.

The invention provides for a label removal method which leaves the object, such as the container surface in an unaltered state, such that after removal of a first label, a second label of smaller surface area may be applied without the need to cover up the whole area of the removed label. The parts of the object which are not covered by the second label and which were covered by the first level, after the removal method, still provide an optically appealing surface, on which the presence of the first label is not visible or is visible in a non-offending manner.

The laser can be accurately controlled to provide the desired depth of cutting through the support layer, and preferably to reach the object surface for optimal ingress of wash liquid along the cut. The laser can generate a cut with a very small line width, such as between 0.1 mm and 3 mm. Hence the amount of label material that is burnt and consequent generation of gaseous combustion products is kept to a minimum. In case the object is a container for drinks, such as beer or soft drinks or water, the label removal method according to the present invention can be carried out with only small adaptations to the conventional washing equipment in a filling plant for cleaning and refilling of returned containers.

The present invention can also be carried out at different locations than a bottle filling plant, such as at points of collection of the containers, in which trade stickers or other labels may be removed by the method according to the present invention.

It is noted that a laser cleaning process for the removal of coatings by burning off these coatings, such as removal of paint, is known from US patent nr. 5,662,762, US patent nr. 5,864,114 or from WO 99/30865, the contents of which are incorporated herein by reference. None of the methods however discloses cutting through adhesively attached labels, in combination with a washing step to allow ingress of washing liquid along the cuts formed in the label.

In one embodiment the lines that are cut in the label intersect to form label pieces with a surface area of between 5 µm and 1000 cm². These label pieces can be easily removed from the washing liquid by conventional separator means such as sieves, centrifuges or hydro cyclones.

In an embodiment the container is moved relative to the laser at a speed of between 5 m/min and 100 m/min. The laser can for instance be placed in a crate washing line at which the crates move on linear conveyors at a speed of between 5 and 25 m/min or in a bottle washing line, at a bottle throughput of for instance 50.000 bottles per hour. The laser can be installed in the washing line of the containers, at a distance from the wet environment, with only small adjustments to the equipment. The labels of the transported containers can at the regular line speeds be treated to cover the complete label, which may have a surface area of for instance 50 cm² for bottles, to 1000 cm² for plastic crates. In addition to the laser, a gas removal unit is installed for removing the gaseous products generated upon burning through the label and, preferably, through the adhesive. In a detection unit, the composition of the gases can be determined to switch off the laser if a specific component is detected, indicating that the depth of the cut is too large such that container material is removed by the laser.

The method of the present invention is particularly suitable for removal of semi-permanent labels which are generally used over a period of between 1-5 years and which make between 1 and 30 return trips to the filling lines. Semi-permanent labels are generally characterised by employing a substrate film of for instance PE, PET, PVC or combination thereof, normally having a pressure sensitive adhesive. Semi-permanent image transfer labels in general employ UV-curable inks and have a water impermeable structure. In contrast, image transfer labels that are suitable to be more easily removed, typically employ water based inks, heat activated adhesive and are (semi-) water permeable.

The semi-permanent labels used in the trade up to this moment fails to provide a firm adhesion under all in use conditions while being able to be easily removed from the container for applying a new label to the container, at least partly over the area from which the old label was removed. By the method according to the present invention, the semi-permanent labels can be removed without damage to the underlying container surface, in such a way as to provide a clean and smooth receiving surface for subsequent label application. In particular when the container is formed of material that is substantially transparent for laser light, such as HDPE or HDPP in case of plastic crates, the energy dissipation of the laser in the crate material is particularly low, and damage to the container caused by the laser penetrating through the label and the adhesive into the container is minimal, such that the settings of laser power are less critical.

Some embodiments of a label removal method according to the present invention will be set out in detail with reference to the accompanying drawings. In the drawings:
Fig. 1 shows a cross-sectional view of a label that is cut in accordance with the present invention,
Fig. 2 shows a side view of a crate washing line according to the present invention,
Fig. 3 shows a top view of the crate washing line of fig. 2,
Fig. 4a-4e show different patterns in which the label can be cut by the laser, and Fig 5a and 5b show a second label applied to an area from which a first label was removed, which area is respectively larger and smaller than the second label.

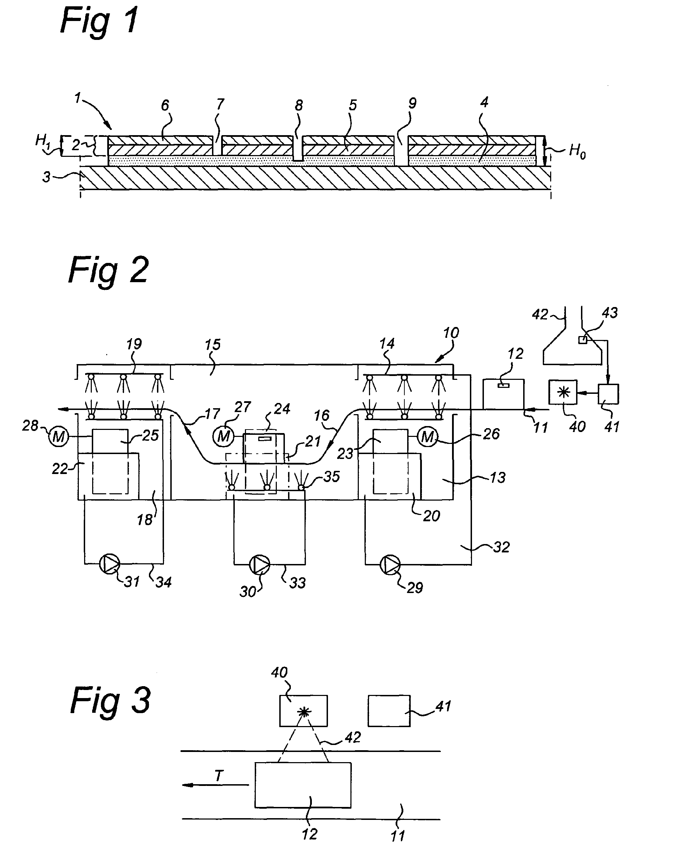

Figure 1 shows a label 1, applied to a container surface 3. The label 1 comprises an image layer 2, with a thickness H₁ .The image layer 2 is adhered to the container surface 3 via an adhesive layer 4. The total thickness of the label is H₀.

In case of a semi-permanent image transfer label, the image layer 2 comprises a barrier layer 6, providing moisture impermeability and scratch-resistance to the label. The barrier layer 6 may be a polymerised material. Underneath the barrier layer 6, the ink layer is placed, the ink being adhered to the container 6 via the layer of adhesive 4. For image transfer labels, the thickness H₀ of the label may be between 10 and 50 µm. The thickness H₁ of the image layer is between 5 and 40 µm, and the thickness of the adhesive layer 5 is between 3 and 20 µm.

In case of a film-type semi-permanent label, the layer 5 may be a film of a thickness of for instance 100 µm, the layer 6 being an ink layer, applied in a specific graphic pattern. In other embodiments, it is also possible that the layer 6 is a clear plastic film, the ink being positioned underneath this layer, the layer 5 in such a case being formed of ink. For a film label, the thickness H₀ of the label may be between 23 and 550 µm. The thickness H₁ of the image layer is between 20 and 500 µm, and the thickness of the adhesive layer 5 is between 3 µm and 50 µm.

As can be seen from Fig. 1, the cut which is made in the image layer 2, can extend up to the adhesive layer 4, but not enter into said layer, as indicated for cut 7. In this case, the wash liquid obtains access to the top of the adhesive layer 4 for weakening or dissolving this layer from this point downwards. As is indicated for cut 8, the cut may extend into the adhesive layer 4, such that the surface of the container 3 is more rapidly reached by the wash liquid. In the preferred embodiment, the cut 9 extends to the container surface, through the entire thickness H₀ of the label.

When the label 1 of figure1 is placed in contact with a washing liquid, the adhesive layer 4 is rapidly reached by the wash liquid via cuts 7,8,9, and is softened and may be emulsified or may dissolve. The cuts 7-9 have a further effect of weakening of the label, which will disintegrate in parts, along the lines of the cuts, especially when in the wash process turbulent soaking conditions prevail. The label pieces of the removed and disintegrated label may be separated from the wash liquid by sieves, centrifuges, hydro cyclones and the like. The clean containers may be stored, transported or may be fed to a re-labelling station for application of a second label in the area of the removed label, or on another part of the container.

Figure 2 shows a schematic side view of a crate washing apparatus for removing the labels according to the present invention from crates 12 that are supplied to the crate washer 10 via a transport conveyor 11. The crates 12 are moved past a laser 40, which is connected to a control unit 41 for deflecting the laser 40 in a predetermined pattern across a predetermined area of the crate 12 in which a label is situated. The crates move at a constant speed of about 25 m/min. Above the conveyor 11, a gas removal unit or fan 42 is placed for removal of any gaseous combustion products resulting from burning of the label by cutting in the label material with the laser 40. At or near the fan 42, a detector 43 is situated for detecting the presence of specific components in the combustion products. The presence of such components indicates if the laser 40 cuts into the material of the crate 12. The detector 43 is connected to the control unit 41, which is adapted to switch off the laser 40 when a specific component in the combustion gases is detected by detector 43.

After cutting into the labels of the crates with the laser 40, the crates 12 are transported to pre-rinsing station 13 and sprayed with a pre-rinsing solution which is applied from a number of nozzles 14 located above and below and predominantly at the sides 9 the transport conveyor 11 on which the labels are provided. The speed of the conveyor 11 is such that the dwell time of the crate 12 in the pre-rinsing station is between 6 and 8 seconds. The temperature of the pre-rinsing solution is 60°C. The pre-rinsing solution preferably comprises a 0.5% NaOH solution.

After passing through the pre-rinsing station 13, the crates are transported through a soaking station 15 via a downwardly sloping section 16 of the conveyor 11. The dwell time of crate in the soaking station is between 10 and 40 seconds. In the soaking station, the crate is completely submerged and a soaking solution is recirculated in the soaking station 15 by means of nozzles 35 to cause turbulent soaking conditions.

The turbulent soaking conditions may for instance include recirculating the liquid from the soaking station 15 via the nozzles 35 at a rate of 60 m³/h for a total volume of the soaking solution of 5 m³ . It is important that the labels are completely removed form the crates 12 in the soaking station 15, without any pieces remaining on the creates. Such remaining pieces would, when dried, adhere firmly to the crates and form an undesired contamination of the crate surface.

From the soaking station 15, the crates are transported via the upwardly sloping conveyor track 17 to an after-rinse station 18. The after-rinse solution may comprise water at a temperature of 30°C. The dwell time of the crates in the after-rinse station 18 is between 6 and 13 seconds.

Connected to each rinsing station 13, 18 and to the soaking station 15 are sieving sections 20, 21 and 22. Each sieving section comprises a rotating belt sieve 23, 24, 25, which are driven by motors 26, 27, 28 respectively. Pumps 29, 30 and 31 draw the rinsing liquid and the soaking liquid from each perspective station through the rotating sieve belts 23, 24, 25 a rate for instance 60 m³/h. The sieved after-rinse stations 13, 18 respectively and to the soaking station 15.

Fig. 3 shows a top view of the label pre-treatment section with laser 40 positioned alongside the conveyor 11, for scanning laser beam 42, directed by the control unit 41, across the moving container surface, the crates being moved in the transport direction T.

The invention is exemplified here by means of crates which are transported linearly along the laser 40. The invention however is not limited thereto, and also applies to bottles which are transported in a carousel along a circular track, such as described in EP-A- 0 819 082. Furthermore, the crates may be slowed down or stopped at the position of the laser 40, may be rotated relative to the laser or the laser 40 itself may be moved relative to the crates. Also the invention is not limited to sealing of the containers in station 15, but embodiments can be conceived in which only a spraying of the labels with water jets using ample water suffices for label removal.

In an alternative embodiment, the laser beam may be directed to the crate while the crate is submerged below water in the wash liquid. This results in effective cooling and in a reduced generation of gaseous combustion products whereas the heat dissipated to the water helps in softening of the adhesive.

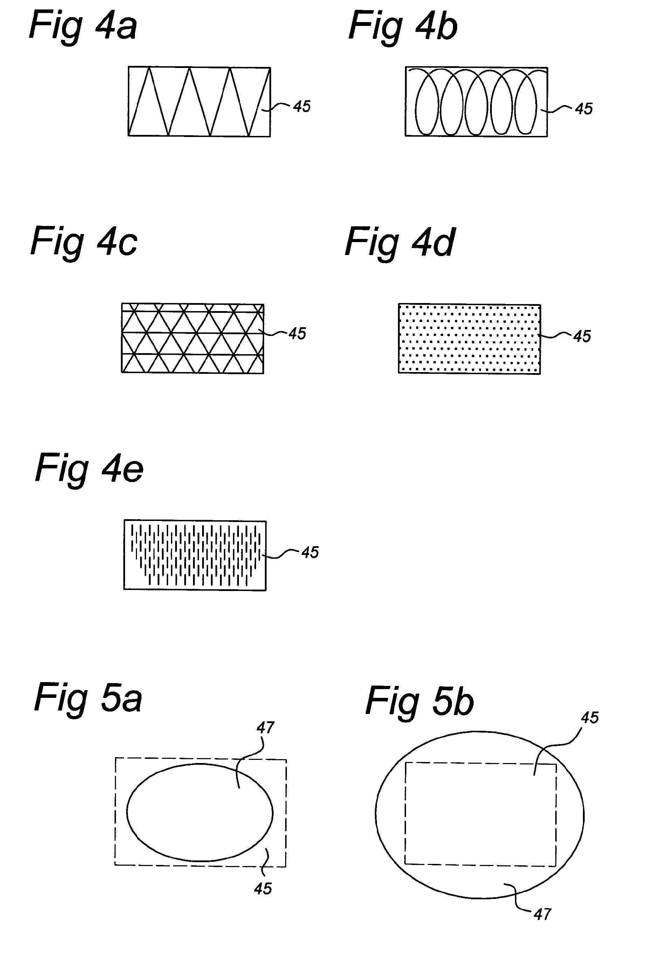

Fig. 4a shows a first pattern in which the label 45 is cut in a saw-tooth pattern. The laser beam 42 is scanned vertically up and down while the crate moves linearly past the laser. In fig. 4b, the laser beam 42 is moved in a circular pattern, whereas in fig. 4c two laser beams are moved across the label in a chequered-like manner. The pattern of fig. 4d consists of a large number of dots, the laser being operated in a pulsed manner, whereas in Fig. 4e a number in interdigitated slots are cut in the label.

Another possibility not shown in the figures is the use of a splitter providing a number of laser beams scanned across the crate surface in a raster pattern of a plurality of parallel lines.

Fig 5a illustrates a new label 47 being applied over the area of the removed label 45, indicated with a dashed line. The label 47 is of smaller surface area than the label 45. The area bounded between the label 45 and the label 47 is visible to the user and is not affected by the removal process to be noticeable. Hence a large degree of freedom in label seize and hence in decorating possibilities is achieved.

In the embodiment of fig. 5b, the label 47 is larger than the label 45 which is removed. A uniform adhesion of the adhesive of the large label 47 to the area of the label 45 and to the area outside of the label 45 is achieved as the laser treatment does not negatively affect the surface characteristics of the container. Hence the label 47 can be applied in a uniform and smooth manner, without undesired tension or wrinkling.

## Claims

1. Method of removing a label (1) from an object, such as a container (3), the label comprising an image layer (2) with a predetermined thickness (H₁) and an adhesive layer (4), the adhesive layer adhering to the container (3), the method comprising the steps of:
- cutting through the thickness (H₁) of the image layer (2) with a laser beam (42) in a pattern across the surface of the label; and
- placing the object (3, 12) in contact with a wash liquid for a predetermined washing period.

2. Method according to claim 1, wherein the laser (40) cuts, though at least a substantial part of the thickness of the adhesive layer (4), preferably reaching the object surface.

3. Method according to claim 1 or 2, wherein the image layer (2) comprises a support layer (5, 6) carrying ink (6, 5) and the adhesive (4).

4. Method according to claim 1, 2 or 3, wherein the laser pattern is a line pattern with a distance between neighbouring lines smaller than 10 cm.

5. Method according to claim 4, wherein the lines intersect to form label pieces with a surface area of between 25 µ² and 1000 cm², preferably between 0.5cm² and 50 cm².

6. Method according to any of the preceding claims, wherein the object (12) is moved relative to the laser (40) at a speed of between 5m/min and 25 m/min.

7. Method according to any of the preceding claims, comprising the step of removing the label pieces from the washing liquid with a sieve (23, 24, 25).

8. Method according to any of the preceding claims, comprising the step of providing a gas removal unit (42) next to the container and removing gases generated during cutting through the label.

9. Method according to claim 8, comprising the step of detecting the presence of a predetermined component in the gases, and switching off the laser upon detection of said predetermined component.

10. Method according to any of the preceding claims, wherein the object comprises plastic, in particular HDPE.

11. Method according to any of the preceding claims, wherein a second label (47) is applied to the container at least partly over the position of the removed first label.
